# EUROPEAN PATENT SPECIFICATION

(11) **EP 1 928 769 B1**
(45) Date of publication and mention of the grant of the patent: **30.06.2010**
(21) Application number: 05821774.6
(22) Date of filing: 22.12.2005
(51) Int. Cl.: B65G 53/66, B65G 53/08, B65G 67/60, E21B 21/06

(54) **APPARATUS AND METHOD FOR CONVEYING DRILL CUTTINGS**
VORRICHTUNG UND VERFAHREN ZUR BEFÖRDERUNG VON BOHRKLEIN
APPAREIL ET PROCÉDÉ DESTINÉS À TRANSPORTER DES DÉBLAIS DE FORAGES

(30) Priority: 29.09.2005 US 239650
(43) Date of publication of application: 11.06.2008
(60) Divisional application: 09178977.6
(73) Proprietor: National Oilwell Varco, L.P., Houston, TX 77036 (US)
(72) Inventor: BURNETT, George, Alexander, Aberdeenshire AB10 7JR (GB); CRABB, Colin, Arbroath DD11 2LZ (GB); WOOD, David, Subiaco W.A. 6106 (AU); SEYFFERT, Kenneth, Wayne, Texas 77018 (US); MCINTOSH, James, Michael, Texas 77385 (US)
(74) Representative: Lucas, Phillip Brian
(86) International application number: PCT/GB2005/050261
(87) International publication number: WO 2007/036680

(56) References cited:
- WO-A-03/021074
- DE-A1- 3 602 958
- GB-A- 2 182 013
- GB-A- 2 392 895
- US-A- 3 602 552
- US-A- 4 726 715
- US-A1- 2005 183 574

## Description

The present invention relates to an apparatus and method for conveying drill cuttings produced in the construction of an oil or gas well according to the preamble of claims 1 and 29 respectively and as disclosed in GB-A-2392895; and particularly, but not exclusively, for moving wet drill cuttings or drying wet drill cuttings before the drill cuttings are moved a substantial distance and subsequently moving the dry drill cuttings.

In the drilling of a borehole in the construction of an oil or gas well, a drill bit is arranged on the end of a drill string, which is rotated to bore the borehole through a formation. A drilling fluid known as "drilling mud" is pumped through the drill string to the drill bit to lubricate the drill bit. The drilling mud is also used to carry the cuttings produced by the drill bit and other solids to the surface through an annulus formed between the drill string and the borehole. The density of the drilling mud is closely controlled to inhibit the borehole from collapse and to ensure that drilling is carried out optimally. The density of the drilling mud effects the rate of penetration of the drill bit. By adjusting the density of the drilling mud, the rate of penetration changes at the possible detriment of collapsing the borehole. The drilling mud contains expensive synthetic oil-based lubricants and it is normal therefore to recover and re-use the used drilling mud, but this requires the solids to be removed from the drilling mud. This is achieved by processing the drilling fluid. The first part of the process is to separate the solids from the solids laden drilling mud. This is at least partly achieved with a vibratory separator, such as those shale shakers disclosed in US 5,265,730, WO 96/33792 and WO 98/16328. Further processing equipment such as centrifuges and hydrocyclones may be used to further clean the mud of solids. The solids are covered in contaminates and residues.

The resultant solids, known herein as "drill cuttings" are processed to remove substantially all of the residues and contaminates from the solids. The solids can then be disposed of in a landfill site or by dumping at sea in the environment from which the solids came. Alternatively, the solids may be used as a material in the construction industry or have other industrial uses. The solids are usually processed on land using methods disclosed, for example in our co-pending PCT Application, Publication No. WO 03/062591. This processing equipment may be arranged near to an oil or gas rig. Alternatively, the processing equipment may be situated on land away from a marine based oil platform or distant from a land based rig. Therefore, the solids have to be conveyed from the exit point of the shakers, centrifuges and hydrocyclones to the solids processing equipment. In certain prior art systems oily drill cuttings are loaded into vessels, skips or cuttings boxes which are lifted by a crane onto a supply boat. Alternatively, this may, in part be carried out by using a ditch provided with a driven screw to convey the wet solids to storage vessels. Such a system is disclosed in our co-pending PCT Application, Publication No. WO 03/021074. Drill cuttings having been processed by a shale shaker can contain approximately 10% to 20% moisture (oil, water) by weight, although this can vary significantly.

It is now often desirable and/or legislatively required to transport recovered drill cuttings to a processing site on shore to remove substantially all of the oil and contaminates therein so that the drill cuttings can be disposed of or used in an environmentally safe and friendly way. Environmental agencies around the world are moving towards a "zero discharge" policy from offshore rigs. Continuous drilling on an offshore oil rig is common and drill cuttings are stored on the rigs until they can be transported by ships known as supply boats which collect the oily drill cuttings and take them to another site for further processing. There is a need to efficiently and effectively store the oily drill cuttings on the rig and also a need to efficiently and effectively store the cuttings on supply boats. The solids may have a fluid, such as water, added to them to form a slurry. The slurry may be pumped into ships, lorries, skips or bags to be moved to the processing site. Alternatively or additionally, the wet solids from the storage vessels may be moved using a compressed gas, as disclosed in PCT Publication No. WO 00/76889 through pipes.

The prior art discloses various methods for transporting low slurry density and low particle density dry solids and non-continuous high slurry density transport of high particle density wet material using continuous positive pneumatic pressure. Many low density slurries typically have particles mixed with air with a specific gravity less than 1.0. The prior art discloses various methods that employ the vacuum transport of high particle and low particle density solids.

Thus tackling the problem of transporting, buffering and storing low slurry density, high particle density material, and particularly, but not exclusively, oilfield drill cuttings or other oily/wet waste material using continuous positive pneumatic pressure.

WO 00/76889 discloses a system for transporting drill cuttings in the form of a non-free flowing paste, the system comprising a pressure vessel having a conical hopper discharge portion having a cone angle sufficient to induce mass flow. The drill cuttings are stored on a rig and supply boat in ISO sized storage vessels which have a conical hopper discharge portion, such that the ISO sized container vessels can be discharged between each other on the rig and ship and between the ship and port. These ISO containers are very tall and the quantity of drill cuttings stored in them is limited due to the lower converging portion of the vessels.

German Patent No. DE 40 10 676 discloses an apparatus for conveying sewage sludge or concrete. The apparatus comprises a pressure vessel having a feed opening and a screw conveyor therebelow. Paddles act as a stirrer and forcibly fill the screw conveyor through an opening in the pressure vessel. The sewage sludge or concrete is moved by the screw conveyor into a nozzle into which compressed air is applied to move the sewage sludge or concrete along a pipe in a continuous stream

United Kingdom Patent No. GB-A-2,330,600 discloses a system for transporting oil drill cuttings from a rig to shore. The system comprises the steps of mixing the oily drill cuttings with a mud to form a slurry, storing the slurry in retention tanks on the rig and subsequently pumping the slurry to retention tanks on a ship for transportation to shore.

WO 03/021074 discloses inter alia an apparatus for transporting solid waste materials, the apparatus comprising: an upstream waste supply means; feed means to transport waste from the waste supply means to a pneumatic conveying means; which pneumatic conveying means comprises a tube within which waste material is transferred from the feed means to a downstream waste collector; wherein said tube is associated with at least one blockage sensing device, and electronic data processing means to process data output from the blockage sensing device.

WO 82/03066 discloses a method for unblocking conveying pipes for particulate material, comprising feeding air to the pipe at spaced-apart positions therealong in order to reduce the length of the blocking material.

GB-A-2,392,895, Blackmore, discloses a pneumatic conveyor comprising a hopper having a rotary valve arranged at an outlet to the hopper. The rotary valve feeds granular material from the hopper into a positive pressure conveying duct. A pressure transducer for measuring static pressure is located in the duct for detecting the onset of a blockage. The speed of the rotor on which the rotary valve is arranged is adjusted to alter the feed rate of the granular material into the conveying duct to maintain pressure within the duct below a predetermined maximum. The rotary valve is replaceable by a screw conveyor.

US-A-4,726,715 discloses a powder feeder having a rotary screw disposed at the base of a pressure vessel hopper. The rotary screw feeds powder into a pressure chamber, which pressure chamber is supplied with positive pressure through a line. The positive pressure is also fed into a conveying line. A balancing pressure is applied thorough a line into the pressure vessel and varied to reduce the possibility of bridging in the powder across the base of the pressure vessel.

In accordance with the present invention, there is provided an apparatus for conveying drill cuttings produced in the construction of an oil or gas well, the apparatus comprising a vessel for receiving material to be conveyed, a metering screw and a discharge line, the metering screw for moving the material from the vessel into the discharge line, and at least one gas inlet for providing positive pressure to facilitate movement of the material through the discharge line the apparatus further comprises a pressure sensor for sensing pressure in the discharge line, and control apparatus for automatically controlling the metering screw in response to a pressure sensed by the pressure sensor apparatus **characterised in that** said vessel has a further gas inlet for allowing gas under pressure into the vessel to inhibit material from being blown from the discharge line across the metering screw and into the vessel and wherein said gas inlet comprises an annular gap about the discharge pipe. Preferably, the gas inlet is provided with a valve to selectively allow gas into the discharge line.

Preferably, the gas inlet is arranged in the discharge line. Preferably, the gas inlet is arranged in a collar surrounding a pipe stub or cowl covering the metering screw through which the material is conveyed, an annular gap formed between the pipe collar and the pipe stub, the annular gap for facilitating entry of the gas into the discharge line. Advantageously, the apparatus further comprises a reducer in the discharge line having a first diameter at a first end and a second diameter at a second end, the diameter of the first reducer gradually decreasing from the first end to the second end, the first end closer to the vessel than the second end. Preferably, the diameter at the first end is substantially equal to the diameter of a cowling surrounding the metering screw and the diameter at the second end, equal to the size of a valve.

Preferably, the further gas inlet is provided with a valve for selectively allowing gas into the vessel. The balancing pressure is preferably equal to the pressure in the box, but the balancing pressure may be slightly less than or greater than the pressure in the box.

Advantageously, the apparatus further comprises an outlet valve for selectively opening and closing the discharge line. Preferably, the gas inlet is arranged between the metering screw and the outlet valve. Alternatively or additionally, a further gas inlet is arranged downstream of the outlet valve. Preferably, the further gas inlet is provided with a valve for selectively allowing gas to pass into the discharge line. Preferably, the gas inlet comprises at least two orifices and at least one valve for selecting between each of the at least two orifices. Advantageously, the at least two orifices are of different sizes. Preferably, the orifices may be in the form of a pipe or located in flow-lines, the flow opening area of the first line or orifice therein sized for facilitating the flow of wet material through the discharge line, and the flow opening area of the second line or orifice therein is sized for facilitating the flow of dry material through the discharge line. Advantageously, each of the at least two orifices are arranged in a pipe each having a valve for selectively allowing gas to pass through one of the at least two orifices. Preferably, the control apparatus includes selection apparatus for selecting a air to flow through one of the at least two orifices or a the other of the at least two orifices. The flow through one of the orifices induces a fast velocity at low pressure and flow through the other of the orifices induces slow velocity at high pressure. Advantageously, at least one of the at least two orifices exit directly into the discharge line. Preferably, both of the orifices exits directly into the discharge line. Advantageously, the each orifice exits directly into the discharge line and into an annular gap formed between the discharge line and a collar.

Preferably, the vessel is provided with an inlet valve for selectively allowing material to be conveyed into the vessel. Advantageously, the apparatus further comprises a hopper arranged above the vessel for receiving material to be conveyed. Preferably, the apparatus further comprises a vibrating device for vibrating the hopper. Advantageously, the hopper is isolated from the vessel. Preferably, a rubber skirt, expansion or isolation joint is arranged between the bottom of the hopper and the vessel or the inlet valve to inhibit material from spilling over the vessel. Advantageously, the hopper has a gate valve to isolate material held therein from the vessel.

Preferably, the apparatus further comprises a load sensor for monitoring the weight of the vessel. The load sensors monitor the weight of the vessel, from which the quantity of material therein can be calculated. The gate valve isolates the weight of the cuttings on the inlet valve from the vessel.

Advantageously, a motor drives the metering screw. The motor may be of any suitable type including hydraulic, pneumatic or electric.

Preferably, the apparatus further comprises movement apparatus having a movement member within the vessel and movable adjacent an opening in the vessel to facilitate passage of the material to the metering screw. Advantageously, the movement member comprises a frame comprising a control shaft connected to a generally circular shaped outer perimeter portion and at least one cross-member. Preferably, the vessel has a substantially planar, flat bottom. Alternatively, the vessel has two sides which slope toward each other. Preferably, to form a chisel plane type vessel.

Preferably, the vessel has a conical hopper portion, wherein the conical hopper portion has a cone angle and forms a lower section of the vessel and the cone angle is below a critical value required to achieve mass flow of the drilling cuttings material.

Advantageously, the pressure sensor is arranged close to the exit of the metering screw. Preferably, the pressure sensor is arranged at the at least one gas inlet of in the pipe leading to the at least one gas inlet. The sensor is arranged between the end of the metering screw and before the outlet valve.

The present invention also provides a method for conveying drill cuttings from a vessel, according to claim 29.

The gas is preferably air, although may be of any suitable type such as an inert gas like nitrogen. The pressure in the gas may be measured at any point along the discharge line, although is preferably close to the exit of the metering screw and preferably by the gas inlet in the discharge line.

Preferably, the speed of rotation of the metering screw is increased when the pressure is below a predetermined pressure level. Advantageously, the speed of rotation of the metering screw is decreased when the pressure is above a predetermined pressure level. Preferably, the predetermined pressure level is set at a first value when conveying wet drill cuttings and the predetermined pressure level is set at a second value when conveying dry drill cuttings. The first value may be 4 bar for conveying wet drill cuttings and the second value may be 1.5 bar for conveying dry drill cuttings.

Preferably, the moisture sensor measures the moisture content of the drill cuttings which moisture content value is relayed to a control apparatus which receives the moisture content value and sets the predetermined level according to whether the drill cuttings are dry or wet.

Advantageously, the gas applied to the drill cuttings to convey the drill cuttings through the discharge line is introduced through one of at least two orifices, one of the orifices smaller than the other, such that one provides gas at a high pressure and slow speed and the other at low pressure and high speed. The gas at high speed suitable for conveying dry drill cuttings and the gas at low speed suitable for conveying wet drill cuttings.

Prior art methods use a cuttings dryer which, when coupled with a pneumatic cuttings conveying system reduces waste volumes and liquid content, leading to an overall reduction in storage volume required and transportation and disposal costs are also reduced. Due to dried cuttings tending more towards lead phase when using a positive pressure pneumatic conveying system, it is important in certain aspects that any change in dryer output is acted upon at the earliest opportunity. It is known to be problematic to convey a product when its consistency is not uniform. To have a storage tank with a mixture of dried cuttings and wet cuttings can require a conveying system to alternate between various modes of flow, between continuous and discontinuous phase flow. The flow regime of cuttings within a pipe does not lend itself to this change as wet cuttings tend towards dense phase with either a shearing type or plug type flow whereby the slugs of cuttings act as a pulsatile regular/irregular moving bed which may fill the entire cross section of pipe; and dried cuttings tend towards suspended flow. The transfer rate is required to be substantially reduced should this "mixture" of modes of flow transfer be required. Reduced transfer rates are not desirable while a vessel is alongside a rig taking on a load. In order to maximize transfer rates, it is beneficial to maintain a cuttings consistency within the storage vessel.

The cuttings discharge from a dryer with a screen may be significantly altered should the screen "blind," hence not allowing the liquid to pass through resulting in a wet discharge. This is known to happen on occasions when a change in drilled formation results in a change of particle size generated at the drill bit.

In certain systems in accordance with the present invention a wetness meter is used to continuously monitor dryer discharge. The wetness meter may be based on the Near Infrared (NIR) principle, where it is known that several molecular bonds absorb infrared light at well defined wavelengths. Common bonds are O-H in water, C-H in organics and oils and N-H in proteins. The light absorbance level at these specific wavelengths is proportional to the quantity of that constituent in the sample material. Infrared filters within the instrument sensor generate a sequence of light pulses, one of these pulses is selected to be at the specific absorbance wavelength for the constituent required to be measured while the other pulses are selected so as to determine the reflectance properties of the material. The light pulses illuminate the sample being measured with the reflected light being collected and focused onto a detector, the electrical signals from the detector are processed into a ratio to provide a value that is proportional to the constituent concentration - this being in percent or other engineering units, water content and oil based mud content can thereby be monitored. This technology is well defined and provides high accuracy and speed of response to facilitate on-line measurement and control of the dryer process.

Alternative methods in accordance with the present invention of obtaining a "wetness" value include passing the product through an open mesh and measuring the pressure drop generated. A rise in pressure drop indicates product adhering to the mesh most likely due to a rise in the "wetness" value. Dielectric constant based instrumentation or vibratory sensitive instrumentation may also be used to monitor change in consistency.

For a better understanding of the present invention, reference will now be made, by way of example, to the accompanying drawings, in which:
Figure 1 is a schematic representation showing a drilling rig provided with a system incorporating a dosing apparatus and storage vessels in accordance with the present invention;
Figure 2 is a side view partially in cross-section of a dosing apparatus of the system shown in Figure 1;
Figure 2A is a schematic view of an alternative part of a dosing apparatus or storage vessel disclosed herein;
Figure 3 is an end view of part of the dosing apparatus shown in Figure 2;
Figure 4 is a schematic side view of part of the dosing apparatus shown in Figure 2, with some hidden parts shown;
Figure 5 is a schematic view in cross-section of a storage vessel of the system shown in Figure 1, the storage vessel having drill cuttings stored therein;
Figure 6 is a view in cross-section taken along line 6-6 of Figure 5, with parts omitted for clarity;
Figure 7 is a view in cross-section of an alternative part for the dosing apparatus shown in Figure 2 or for the storage vessel shown in Figure 5;
Figure 7A illustrates the shape of a cross-sectional view of part of the part shown in Figure 7;
Figure 7B to 7D illustrate alternative shapes to the shape shown in Figure 7;
Figure 8 is a view in cross-section of an alternative part of the dosing apparatus shown in Figure 2 or storage vessel shown in Figure 5;
Figure 9 is a schematic view of part of a system in accordance with the present invention;
Figure 10A is a schematic view of a dosing apparatus in accordance with the present invention;
Figure 10B is a schematic view of a dosing apparatus in accordance with the present invention; and
Figure 10C is a schematic view of a dosing apparatus in accordance with the present invention.

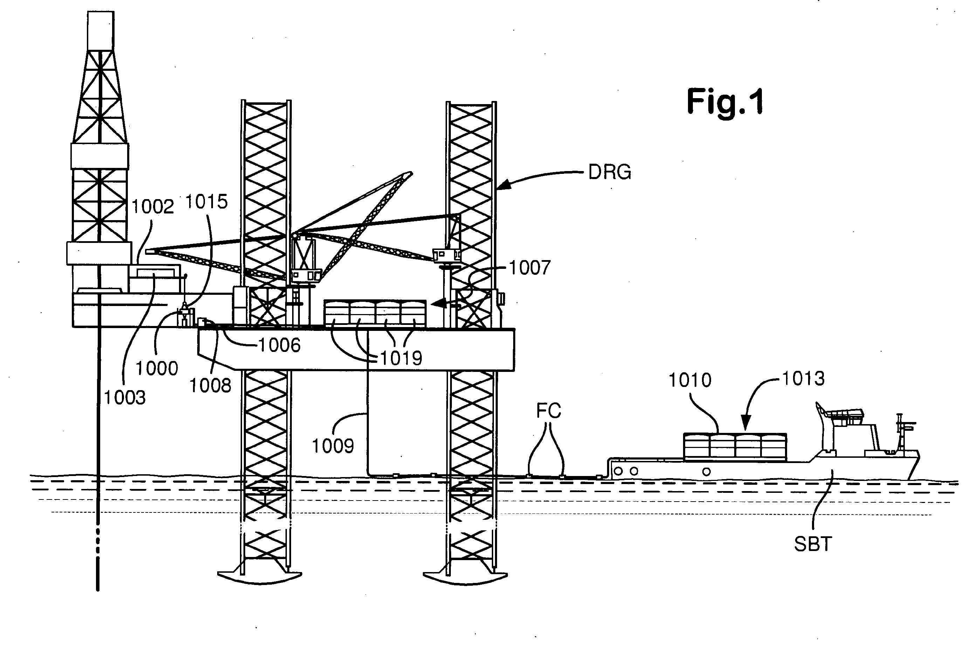

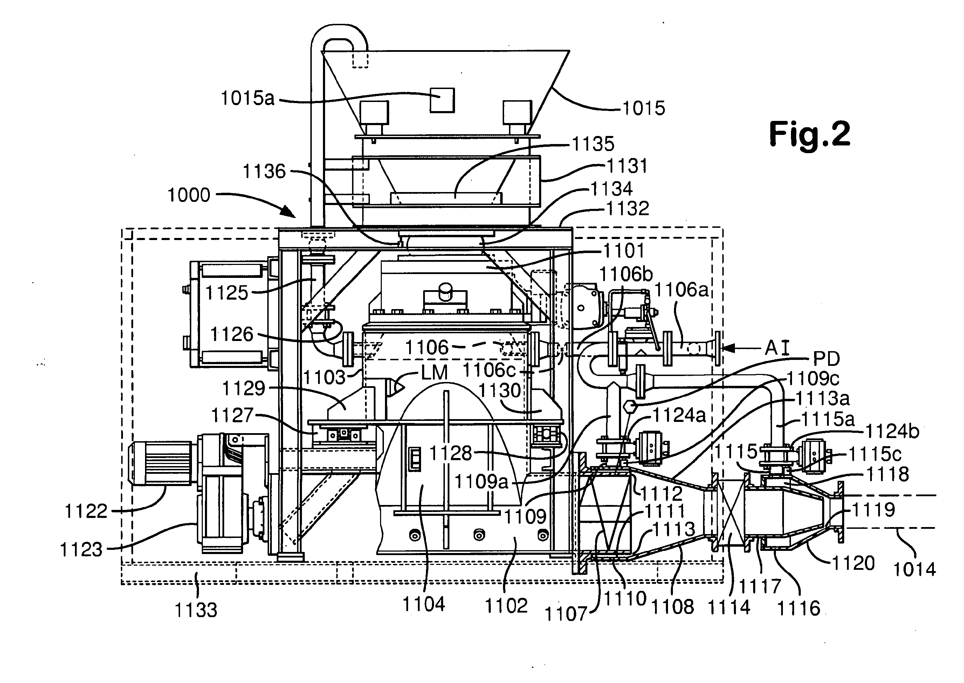

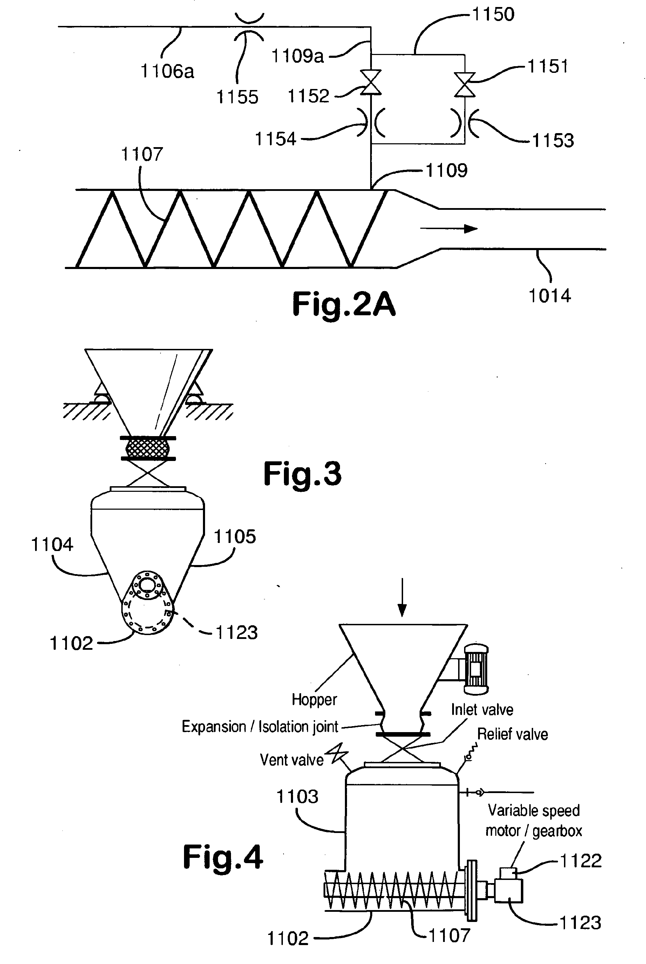

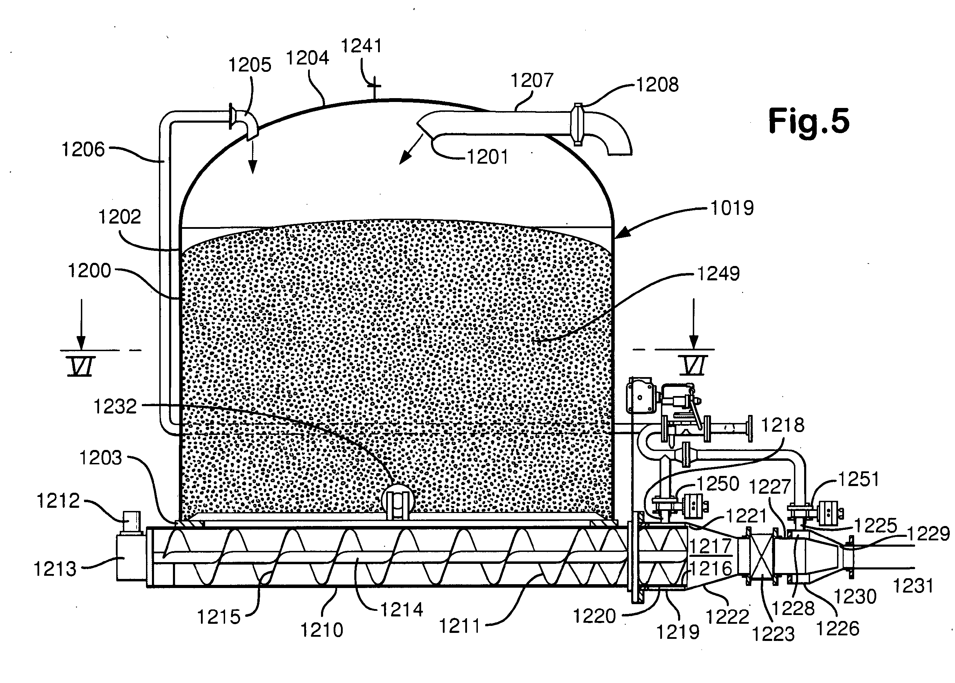

Referring to Figure 1, drill cuttings material in a slurry produced from drilling a well is feed to a bank of shale shakers 1002 situated on a drilling rig DRG. The shale shakers 1002 separate the fluid in the slurry from drill cuttings which fall into a ditch 1003. Optionally, the ditch 1003 has an auger or other conveyor (not shown) running therealong to move the material to a distal end of the ditch 1003. The wet drill cuttings material falls directly into a vibrating hopper 1015 of a dosing apparatus 1000. The dosing apparatus 1000 feeds a pneumatic conveying line 1006 through which the material is blown by compressed air provided by a compressed air supply 1008. The pneumatic conveying line 1006 leads to a bank 1007 of storage vessels 1019. In one aspect the dosing apparatus 1000 includes components as described with reference to Figure 2 and the storage vessel described with reference to Figure 5 below. Alternatively, the drill cuttings material is re-injected directly in to a well (CRI) from the dosing apparatus or from the bank 1007 of storage vessels 1019. The drill cuttings material is kept in the storage vessels 1019, which act as a buffer storage, until a supply boat SBT arrives and is ready to receive the drill cuttings material. A flexible pneumatic line 1009 is attached to the bank 1007 of storage vessels 1019 and to a bank 1010 of storage vessels 1013 on the supply boat SBT. Optionally, a screw or other conveyor associated with the storage vessels 1019 doses the flexible pneumatic line 1009 with drill cuttings material. Positive pneumatic pressure (supplied, for example by a rig pressure system or a dedicated pressure system) in the flexible pneumatic line 1009 blows the drill cuttings material into a further storage vessel 1010 of the bank of storage vessels 1013 on the supply boat SBT.

The supply boat SBT then transports the bank 1010 of storage vessels 1013 to another location, such as a harbour. The storage vessels 1013 may be lifted off the supply boat SBT and placed on train cars, flat bed trucks or lorries, or directly into a processing plant. Alternatively, further storage vessels (not shown) are located on shore and the drill cuttings are discharged from the bank 1013 of storage vessel on the supply boat SBT to the storage vessels located on shore, in any way as described above herein in relation to moving cuttings from an offshore rig to a supply boat. Any control system or apparatus described herein may be used with the vessels, apparatuses, and systems in accordance with the present invention.

Referring to Figures 2 to 4, in one aspect the dosing apparatus 1000 has a valve 1101, which may be a spherical dome valve with an inflatable seal supplied by Roto Disc Co. or of the type disclosed in GB A 1,539,079, arranged between the hopper 1015 and a chisel plane pressure vessel 1103 having for example, a capacity of approximately 0.33 cubic meters, although the capacity may typically be between 0.1 and 1 cubic meter. Vibrator apparatus 1015a selectively vibrates the hopper 1015, which inter alia inhibits bridging of the drill cuttings material about or across an opening at the lower end of the hopper 1015. The vessel 1103 is a chisel plane type vessel having two converging walls 1104 and 1105. An air inlet 1106 is arranged in an upper part of a wall of the vessel 1103 for selectively receiving air under pressure through a conduit 1106a from an air inlet AI. The air under pressure may be obtained from a compressor (not shown). A screw feeder or metering screw 1107 is arranged at the bottom of the converging sides 1104 and 1105 in a housing 1102 integral therewith, which leads into a reducer 1108. The reducer 1108 is provided with an air inlet 1109 in an outer wall 1110. Valve apparatus 1124a selectively controls air flow through the inlet 1109. The air inlet 1106 facilitates pressure equalization across the screw when pressure is generated within the transfer line by the conveying air through the valve 1124a.

The air inlet 1109 is in fluid communication with an annulus 1111 formed by a flanged pipe stub 1112 and the outer wall 1110. The flanged pipe stub 1112 has, in certain aspects, an inner diameter substantially equal to the inner diameter of the housing 1102 for the screw 1107, which, in one particular aspect, is about 30cm (twelve inches). The annulus 1111 has an annular opening 1113 formed by the end of the pipe stub 1112 and a converging wall 1113a of the reducer 1108. A valve 1114 at the converged end of the converging wall 1113a is an on/off isolation valve. The inner diameter of the converged end of the converging wall 1113a, in certain aspects, is 20cm (eight inches) in diameter.

A further air inlet 1115 is provided in an outer wall 1116 having a substantially concentric flanged pipe stub 1117 forming an annulus 1118 therebetween. Valve apparatus 1124b controls air flow in a conduit 1115a and through the inlet 1115. The flanged pipe stub 1117 has an inner diameter substantially equal to the inner diameter of the converged end of the converging wall 1113. The annulus 1118 has an annular opening 1119 formed by a converged end of the pipe stub 1117 and a converging part 1120 of outer wall 1116. The inner diameter of the end of the converged outer wall, in certain aspects, is 125cm (five inches), which is connected to a conveying line 1014 which has, in one particular aspect, an internal diameter of 125mm (5 inches) and may be a hose or rigid pipe. The conveying line 1014 may be in communication with storage apparatus and/or additional flow conduit(s).

In use, drill cuttings material from the ditch 1003 fall into the hopper 1015. Valve 1114 is closed and the inlet valve 1101 is opened. The drill cuttings material falls from the vibrating hopper 1015 into the vessel 1103. Inlet valve 1101 is then closed after a predetermined time or when the weight of the vessel 1103 has increased to a predetermined weight or when the height of the wet drill cuttings in the hopper 1015 has decreased by a predetermined amount, which, in one aspect is measured by a measuring device, for example an ultrasonic device, a radar device, or laser measuring device LM (shown schematically), which continually monitors the height of the wet drill cuttings in the hopper 1015.

The vessel 1103, in one aspect, now contains approximately 0.33 cubic meters of wet drill cuttings. Air enters the inlet 1106 and inlet 1109 from conduits 1106a, 1106b and 1128. A valve 1106c controls flow to the air inlet 1106. The screw 1107 is then rotated by activating a motor 1122 through a gear box 1123. Valve 1114 is opened and air inlet 1115 at an end of the conduit 1115a is closed. Drill cuttings material is then dosed by the screw 1107 into the reducer 1108 and blown through the valve 1114 and into the conveying line 1014 by positive pressure applied through inlet 1109. A pressure monitoring device 1109c monitors the pressure at the inlet 1109. A pressure monitoring device 1115c monitors pressure at the inlet 1115. A control system PD (shown schematically; in communication with the pressure sensors), in one aspect, maintains the pressure at the inlet 1109, in one aspect at between 3.5 to 4 bar by altering the speed of rotation of the screw 1107 for conveying drill cuttings material. If the pressure reading is too high, the speed of rotation of the screw 1107 will be decreased; if the pressure is too low, the speed of rotation of the screw 1107 will be increased. The drill cuttings material is conveyed along a conveying line (discharge pipework) 1014 in slugs by the screw 1107. In one aspect, slugs are between 0.5m and 10m long. In certain aspects, one lug equal to the entire content of the vessel 1103 is discharged, alternatively, the entire contents of the vessel 1103 is discharged in several discrete slugs or up to fifty slugs. The formation of slugs may simply be due to air under pressure forming pockets between the material to form slugs, which may happen randomly, such that fifty slugs may form or only five slugs may form. This may, at least in part, be dictated by the consistency of the drill cuttings, which may vary considerably from relatively dry metal cuttings through to wet earth, sticky clays and slurries. Once the vessel is empty, which is known by a monitoring the pressure at the sensor 1109a or waiting a predetermined time period, or by measuring a predetermined decrease in weight of the vessel 1103, valve 1114 is closed, the air supply through inlets 1106 and 1109 is stopped, and the air is diverted through the inlet 1115 to maintain pressure in the conveying line 1014 and/or to assist in moving any still-remaining material into and down the line 1014. Air pressure in the vessel 1103 is allowed to vent to atmospheric pressure through a line 1125 by activation of a valve 1126. The inlet valve 1101 is opened allowing more drill cuttings material to fall into the pressure vessel 1103 and the cycle is repeated.

The vessel 1103 is weighed using load cells 1127 and 1128 located under lugs 1129 and 1130, which support the entire weight of the vessel 1103. The vibrating hopper 1015 is supported by a frame 1131, which is supported by a further frame 1132 mounted on a skid 1133. An expansion or isolation joint (not shown) or a rubber skirt 1134 is arranged between the vibrating hopper 1015 and the inlet valve 1101, which isolates the vibrating hopper 1015 from the vessel 1103. A valve 1135 (for example a gate valve or slider valve) is located at the bottom of the hopper 1015 and above the rubber skirt 1134 to isolate the weight of cuttings in the hopper 1015 from the vessel 1103. The valve 1135 is closed after a predetermined time period, and a measurement is taken by the load cell 1127, which is indicative of how full or empty the vessel 1103 is. The valve 1135 is then opened. The inlet valve 1101 is fully open during a fill cycle and is closed whilst dosing the conveying line 1014. A further load cell 1136 is located between the hopper and the further frame 1132 so that the weight of cuttings in the hopper 1015 can be monitored to ensure that the hopper 1015 is not overfilled.

In one aspect, the conveying line 1014 leads to an inlet of the storage vessels 1019. The storage vessels are arranged on the offshore rig or if it is a land based rig, near the rig, for example within 300 meters although may be up to three or four kilometres away.

Figure 2A shows an alternative part for a part of the dosing vessel shown in Figure 2. It should be noted that the part shown in Figure 2A may be used solely in flow line 1109a or in any one or more or all flow lines 1109a, 1106b, 1115 carrying compressed air to drill cuttings to be conveyed through conveying conduit 1014. It should also be noted that the part shown in Figure 2A may be used in any or all of the flow lines 1218, 1206, 1225 of the storage vessel shown in Figure 5. To accommodate both wet and dry cuttings and to provide adjustment for different cuttings, the position of selectively operable valves 1151 and 1152 determines whether air from the line 1109a flows through an orifice 1153 or through an orifice 1154. The open area of the orifice 1153 is greater than the open area of the orifice 1154. When the system is processing dry cuttings, i.e., when greater air velocity is needed to maintain material in suspension in an air flow, the valve 1152 is closed and air flows through the line 1150, through the open valve 1151, through the orifice 1153 and to the inlet 1109 so that an appropriate air flow to move dry material is achieved (for example at between a pressure of 1 to 1.5 bar). When the system is processing wet cuttings, i.e. when lesser air velocity is needed to achieve solids accumulation and flow in the exit lines, the valve 1151 is closed and air flows through the line 1109a, through the open valve 1152, through the orifice 1154, and to the inlet 1109 so that an appropriate air flow for wet material is achieved (for example at a pressure of about 4 bar). The orifices 1153 and 1154 are shown to merge into one line before entering the annulus 1111 (see

Figure 2). However, the orifices 1153 and 1154 may be arranged directly in the outer wall 1110 of the reducer 1108, such that air under pressure passes directly from the orifice 1153 and/or 1154 into the annulus 1111 and/or into the reducer 1108. The system as shown in Figure 2A may be used in the dosing apparatus shown in Figure 2 (and in other systems described below) and, as shown in Figure 2, the line 1115a and its associated apparatus, valve, inlet, etc. is optional for systems in accordance with the present invention. In one particular aspect, to convey material through the system, the valves 1101, 1126, and 1124b are closed; the valves 1124a and 1106c are open (to equalize pressure across the screw 1107); and the screw 1107 is turned at a selected speed (for example appropriate for wet cuttings or dried cuttings) to move cuttings material to the reducer 1108. The control system PD which may be connected to each sensor, operable apparatus, motor, and item in the system (which may be a PID control system or a PLC system) is programmed to handle wet or dry cuttings and to control all valves, including the valves 1151, 1152 when present.

In one aspect, following the fill sequence a convey sequence is initialized whereby inlet valve 1101, vent valve 1126 and the flush air valve 1124b are closed, outlet valve 1114, conveying air valve 1124a and pressure equalization valve 1106c are opened. This facilitates air flow from the compressor through the discharge pipework 1014. The pressure attained by this air is a function of the pipe length, configuration, bore, internal surface finish and air flowrate. An orifice 1154 is sized such that the volummetric flow rate of air is such that a predetermined air velocity is achieved suitable for the transfer of drill cuttings. Typically this velocity would be around 20 meters per second for dried drill cutting i.e. powder/granular composition whereby the mode of transfer within the line 1014 is termed dilute phase. Dilute phase transfer is such that the material is transferred through the pipe at a velocity above that of the saltation velocity of the material. Air velocity at around 10 meters per second is utilized when transferring drill cuttings as taken direct from a shale shaker, from the shale shaker the drill cuttings will have a drill mud constituent thus resulting in a cohesive agglomerative substance for which the optimal transfer regime within the line 1014 is known to be dense phase. Dense phase describes the flow of material through the pipe as being set off in waves/slugs. Dilute phase transfer may be achieved at a lower pressure, in one aspect, around 1.5 Bar compared to dense phase which, in one aspect, utilizes 4 Bar. As such the appropriate pressure setting is generated by the air conveyor by introducing material into the line 1014 at the appropriate rate. The cuttings are carried/suspended in the airflow thus conveying in a uniformly dispersed phase during lean phase transfer. During dense phase the cuttings create a bed on the bottom of the pipe and as further material is added into the pipe a critical volume occurs whereby the cuttings spontaneously create a moving layer or wave slug or discrete slug of cuttings. On startup the compressed air flows through the conveying air valve 1124 and, in one aspect, a pressure drop across the transfer line 1014 of around 0.3 Bar is achieved, i.e. this is the pressure generated by the compressor to facilitate the appropriate flow rate of air through the pipe. The metering screw 1107 is then rotated in order to feed the cuttings into the transfer line 1014; the addition of cuttings into this transfer line then generates a back pressure which the control system can use as the basis for determining the rotational speed of the metering screw 1107. In one aspect the PLC based control system utilizes a standard PID (proportional integral and derivative) control loop based on a set point of either 1.5 Bar or 4 Bar depending on the cuttings being transported. As the pressure equalization valve 1106 is open, this facilitates any pressure generated at the transfer line 1014 to be equalized into the pressure vessel 1103 which nullifies any adverse pressure gradient that may effect the performance of the metering screw 1107. An orifice is located within the pipe connection 1106 in order that the air flow into the hopper 1103 is minimized. This conveying cycle may be terminated manually, automatically via a timer, via a loss in weight system or alternatively based upon pressure feedback; i.e., it is understood that if the air pressure generated at line 1014 approaches that of the empty line pressure drop and the metering screw 1107 is rotating over a period, then it is known that the hopper 1103 is then empty and thus the transfer cycle should be stopped. In one aspect, the convey stop procedure includes: closing of the pressure equalization valve 1106c, the conveying air valve 1124a and outlet valve 1114; opening of the flush air valve 1124b to further purge the transfer line 1014 until the pressure drop achieved approaches that of an empty pipe for a nominal time period of around one minute. At the same time as the flush air valve 1124b is opened, the vent valve 1126 is opened in order to ensure that no pressure is contained within hopper 1103. Following this, the inlet valve 1101 is opened in order to accept into hopper 1103 a new charge of cuttings from hopper 1015. In this state, the vibratory motor 1105a is activated in order to assist the transfer of charge.

In certain particular aspects the valves 1124a and 1124b may be standard butterfly valves.

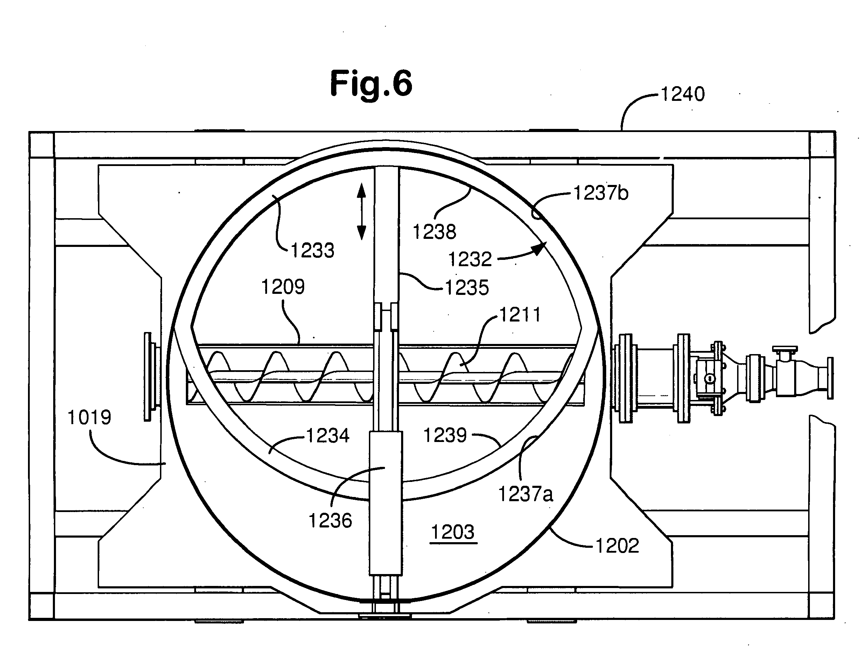

Referring to Figures 5 and 6, the storage vessels 1019 include a generally cylindrical vessel 1202 of circular cross section. The vessel, in one aspect, has an internal capacity of approximately 13.5 cubic meters. The vessel 1202 has a substantially circular planar base 1203 and a domed cap 1204. The planar base 1203 and the domed cap 1204 may be formed integrally or be welded to the wall of the vessel 1202. The vessel 1202 may be made of steel of the type defined by British Standard 1501 224 49B and is designed, in certain aspects, to withstand a working pressure of between 1 and 20 Bar, preferably 7 Bar. The domed cap 1204 has an air inlet 1205, having a 52mm (two inch) diameter air supply hose 1206 attached thereto. The domed cap 1204 is also provided with a cuttings inlet pipe 1207 provided with a valve 1208, such as a flap valve or butterfly valve which may be operable remotely using a stepper motor. The cuttings inlet 1201 has, in certain aspects, an internal diameter of 125mm (5 inches). The planar base 1203 has a generally rectangular opening 1209 arranged along the diameter of the planar base 1204. A tube 1210 has a rectangular opening corresponding to and fixed to the perimeter of the opening 1209 in the planar base 1204 to form a pressure tight seal. The tube 1210 may be welded or otherwise formed with the planar base 1203. The tube 1210 houses a screw conveyor 1211 driven by a variable speed hydraulic motor 1212 through a gear box 1213. The motor 1212 may alternatively be electric, petrol, pneumatic or otherwise powered motor.

The screw conveyor 1211 is, in certain aspects, a ribbon screw having no shaft or, as shown in Figure 5, is a shaft 1214 and a helical blade 1215. The helical blade 1215, in one aspect, has a diameter of between 150mm and 600mm (6 and 24 inches), and may have a diameter of about 300mm (twelve inches). The pitch of the screw may be constant or may reduce in pitch away from the discharge end. The shaft 1214 has a first end coupled to the variable speed hydraulic motor 1212 and a second end rotatably arranged in a bearing (not shown) in a discharge end of the tube 1210. The helical blade 1215 extends along substantially the entire diameter of the planar base 1203 and extends into a portion of a flanged pipe stub 1216. A discharge set up is very similar to the arrangement for the dosing apparatus 1000 in that it has a reducer 1217 provided with a air inlet 1218 in an outer wall 1219. The air inlet 1218 is in fluid communication with an annulus 1220 formed by the flanged pipe stub 1216 and the outer wall 1219. The flanged pipe stub 1216 has, in one aspect, an inner diameter substantially equal to the inner diameter of the tube 1210 for the screw 1211, which is about 30cm (twelve inches). The annulus 1220 has an opening 1221 formed by the end of the pipe stub 1216 and a converging wall 1222 of the reducer 1217. A valve 1223 is located at the converged end of the converging wall 1222. The inner diameter of the converged end of the converging wall 1222, in one aspect, is 20cm (eight inches) in diameter. An air inlet 1225 is provided in an outer wall 1226 having a substantially concentric flanged pipe stub 1227 forming an annulus 1228 therebetween. The flanged pipe stub 1227 has, in one aspect, an inner diameter substantially equal to the inner diameter of the converged end of the converging wall 1222. The annulus 1228 has an opening 1229 formed by a converged end of the pipe stub 1227 and a converging part 1230 of outer wall 1226. The inner diameter of the end of the converged outer wall, in one aspect, is 125cm (five inches) which is connected to a conveying line which has an internal diameter of 125mm (5 inches) and may be a hose or rigid pipe. The cuttings outlet 1231 has an internal diameter of 125mm (5 inches) and is attached to a cuttings conveying line (not shown) of the same internal diameter, which may be a flexible hose or a rigid pipe. A valve apparatus 1250 controls flow to the inlet 1218 and a valve apparatus 1251 controls flow to the inlet 1225. This system can operate as a system utilizing the apparatuses in Figure 2 and in Figure 2A and these valves can act as do the valves 1124a, b, Figure 2.

A sliding frame 1232 is arranged inside the vessel 1202 on the planar base 1203 about opening 1209. The sliding frame 1232 has two symmetrical curved members 1233 and 1234 forming an eye shape which is has a central member 1235 passing through the center of the planar base 1203 and arranged perpendicular to the opening 1209 and in line with a hydraulically actuated piston and cylinder 1236 is joined at one end to the wall or planar base 1203 of the vessel 1202 and the other to the center of the central member 1235 of the sliding frame 1232, to induce movement of the sliding frame 1232 over the planar base 1203 backwards and forwards as indicated by the arrow within the confines of the vessel 1202. The curvature of the two symmetrical curved members 1233 and 1234 is the same or slightly less than the curvature of the perimeter of the planar base 1203. The outer edges 1237a and 1237b of the two symmetrical curved sections 1233 and 1234 are chamfered, whereas the internal edges 1238 and 1239 facing the opening 1209 are at right angles to the plane of the planar base 1203. The curved members 1233 and 1234 have flat bottoms. The angle of the chamfer is, in certain aspects, between 45 and 20 degrees from the flat bottom.

The curved members 1233 and 1234 may have various profiles to accomplish the function of sliding underneath the drill cuttings when moving away from the opening 1209 and acting as a scoop to scoop the drill cuttings into the opening 209 for discharge.

The storage vessel 1019 is, optionally, attached to a skid 1240 to facilitate transport of the storage vessel on trucks, lorries, supply boats, train cars and on offshore and onshore rigs. The height of the storage vessel when mounted on the skid is, in one aspect, 3.26m, the length of the skid is 3.95m and the width of the skid is 2.9m.

A pressure relief valve 1241 is provided in the pressure vessel 1202, which is set to between 10% and 20% above the normal working pressure of up to 7 Bar. A hatch (not shown) is also provided in the wall of the pressure vessel 1202 to allow access for inspection, servicing and cleaning.

In use, the storage vessel 1019 is vented to atmosphere, either using a valve or by disconnecting the air supply line 1206 from the air inlet 1205. Doses of drill cuttings enter the storage vessel 1019 through the feed line 1014 from the apparatus 1000 and gradually fill the storage vessel 1019. The storage vessel 1019 can store up to preferably, twelve cubic meters of drill cuttings, but may be sized to store between five and 20 cubic meters. Vessel capacity is indicated via load cells to determine mass capacity or a level sensor is used to do this. Once the storage tank 1019 is full or near full, a valve (not shown) in the feed line is operated to divert the doses of drill cuttings to another storage vessel, like the vessel 1010. Alternatively, the feed line is disconnected from cuttings inlet 1201 and connected to the cuttings inlet on a further storage vessel 1019.

At a convenient time when the supply boat or vehicle to transport the drill cuttings is in close proximity to the bank 1010 of storage vessels 1019, for example when the supply boat is moored to or within three or four hundred meters of the offshore rig, one end of a flexible hose 1009 is connected to one of the storage vessels 1019. The other end of the flexible hose is connected to at least one storage vessel 1013 in a bank 1010 of storage vessels 1013 on the supply ship. Floatation collars FC may be provided on the flexible hose to inhibit the hose from sinking into the sea. Air enters the inlet 1205 in the pressure vessel 1202 and through inlet 1218 to equalize the pressure across the screw 1211. Valve 1223 is opened and air inlet 1225 is closed. The screw 1211 is then rotated by activating motor 1212 through gear box 213. The drill cuttings 1249 are dosed by the screw 1211 into reducer 1217 and blown through the valve 1223 and into conveying line 1009. A pressure monitoring device 1250 monitors the pressure at the inlet 1218. In one aspect, a PID control system maintains the pressure at the inlet 1218 at between 3.5 to 4 bar (dense phase) or to 1/5 bar (lean phase) by altering the speed of rotation of the screw 1211 for conveying the drill cuttings material. If the pressure reading is too high, the speed of rotation of the screw 1211 will be decreased; if the pressure is too low, the speed of rotation of the screw 1211 will be increased. The drill cuttings are conveyed along the conveying line 1009 in slugs. In certain aspects, the slugs will be between 0.5m and 10m long. The hydraulic piston and cylinder 1236 is activated to move the sliding frame 1232 backwards and forwards to facilitate movement of the drill cuttings into opening 1209. The chamfered edges on the sides of the members 1236, 1237 of the sliding frame 1232 ensure that upon movement away from the opening 1209 the components of the sliding frame slide under the drill cuttings and upon movement towards the opening 1209, the opposed right angle or scoop profile surfaces pull the drill cuttings towards the opening 1209. The drill cuttings move through opening 1209 into the screw conveyor. Thus the first drill cuttings to enter the pressure vessel 1202, are the first drill cuttings to be removed from the pressure vessel 1202. Once the storage vessel 1200 is empty valve 1223 is closed, the pressurized air supply through inlets 1205 and 1218 is stopped and the pressurized air is diverted through inlet 1225 to maintain pressure in the conveying line 1009. Air pressure in the pressure vessel 1202 is allowed to vent to atmospheric pressure through vent 1241 or by a diverter valve (not shown).

In one aspect, the pressurized air supply on a rig is set at 7 bar.

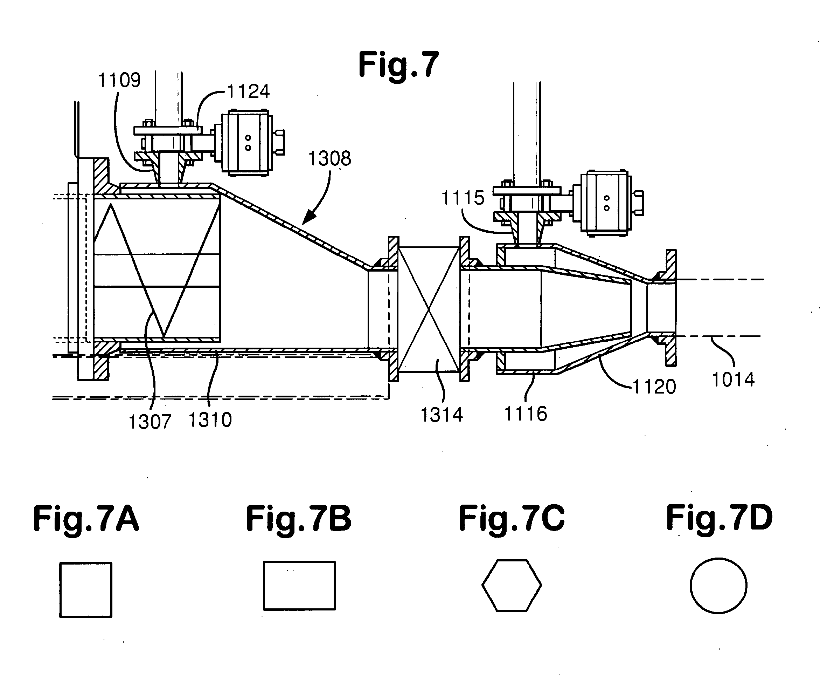

Figure 7 shows an alternative form of reducer 1308 to the reducers described above. Reducer 1308 has a lower wall collinear with the lower part of the outer wall 1310 and a portion which slopes from the top of the outer wall 1310 to the top of the valve 1314, such that the center of the valve 1314 is off center from the axis of the screw 1307. The opening to the screw 1307 may be circular (see Figure 7D), oval, square (see Figure 7A), rectangular (see Figure 7B) or any polygon shape (for example see Figure 7C) and the reducer may reduce to a smaller opening which may also be circular, oval, square or any polygon shape the diameter of the valve 1314. The floor of the reducer 1308 is substantially horizontal, which facilitates the conveying of liquid along the conveying line. Like numerals in Figures 5 and 6 indicate like parts as in Figure 2. Preferably, the reducer 1308 is provided with an inlet having two differently sized orifices: one small orifice for high pressure, low speed transfer of wet, conglomerated drill cuttings; and a large diameter orifice for low pressure, high speed transfer of dry drill cuttings, such as the arrangement shown in Figure 2A.

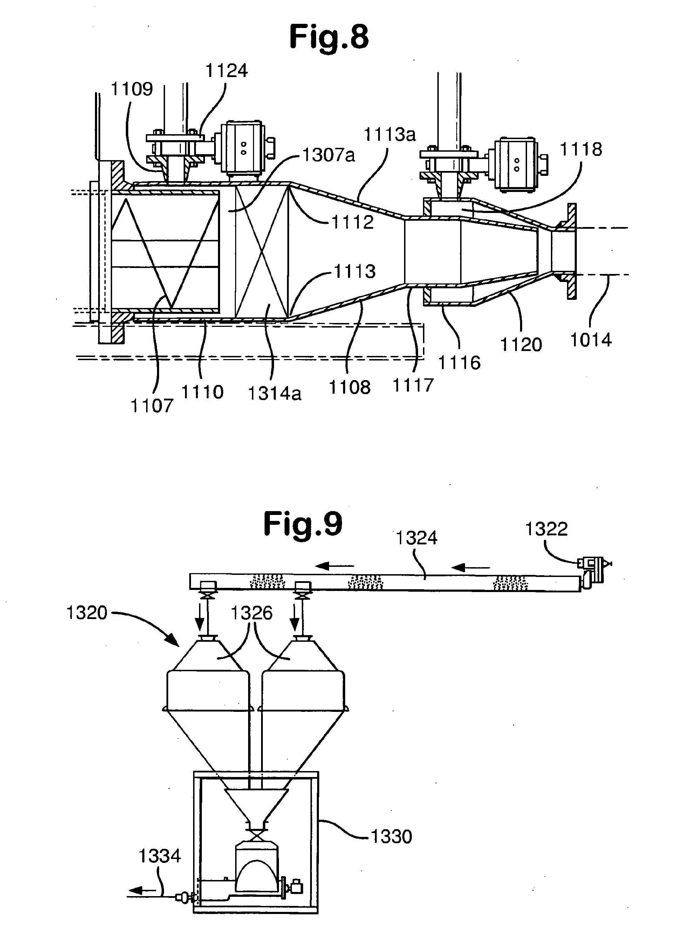

Figure 8 shows an alternative position for a valve 1314a (like the valve 1314, Figure 7). The valve 1314a is located at the exit of the screw, which may be substantially the same diameter as the screw 1107 and the reducer 1108 may be located external the valve 1314a. Optionally, there is a gap 1307a between the conveyor and the valve 1314a.

In one aspect, when a system in accordance with the present invention, for example as shown in Figures 1 and 9, deals with relatively dry cuttings, the pressure in the dosing apparatus (for example in the dosing apparatus 1000, Figure 3 or apparatus 1330, Figure 9) and in storage vessels (for example a storage vessel 1019, Figure 5) can be maintained at a level less than that used in storage vessels of systems that process relatively wet drilling cuttings material; for example, in certain aspects a pressure of 3.5 to 4 bars is used with the relatively wet material whereas a pressure of 1.2 to 2 bars is used for the relatively dry material. Also, with the relatively dry material, the speed of air and material in conveying lines and conduits can be greater than the speed of air and relatively wet material. In certain aspects, therefore, air inlet orifices can be larger when processing relatively dry material.

Figure 9 shows a system 1320 in accordance with the present invention for conveying drill cuttings from shale shakers 1322 (shown schematically) which flow in a conveyor 1324 (any ditch herein may have a conveyor) to cuttings dryer apparatus, for example one, two, three or more dryers. Any suitable dryer apparatus or system may be used. As shown in Figure 9 two vortex dryers 1326 (any as described or referred to herein and, in one aspect, as described in Great Britain Patent No. 2, 297,702 A) receive the drilling cuttings material and the material flows from the dryers 1326 to a dosing apparatus 1330 (like any described herein, for example as in Figures 2, 2A, and/or 4). Material exits the apparatus 1330 in a conduit 1334.

The dryers 1326 remove moisture from the material and, in certain aspects, remove a substantial amount of moisture. In certain aspects, the total moisture content by weight of the material is reduced to about 3% and, in certain particular aspects, it is reduced to between 1% and 3% by weight. Such relatively dry material is relatively free flowing, is not a paste, is not a free flowing paste, and is not a non-free flowing paste. Thus, in certain aspects, for example speeds of for example 30 m/sec dry are achieved with the relatively dry material while speeds of for example 10 - 12 m/sec wet are achieved with the relatively wet material.

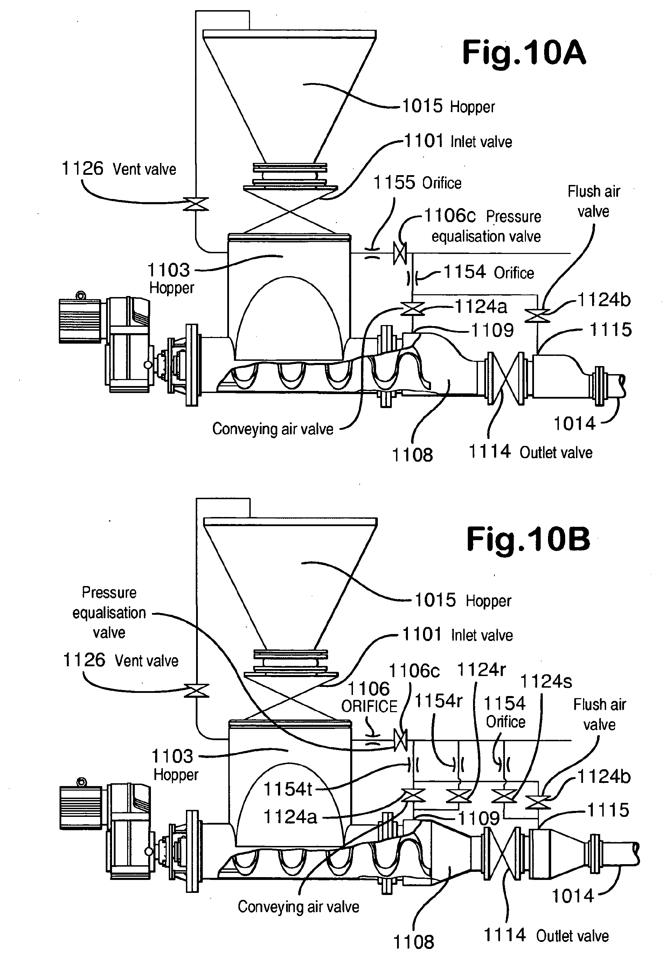

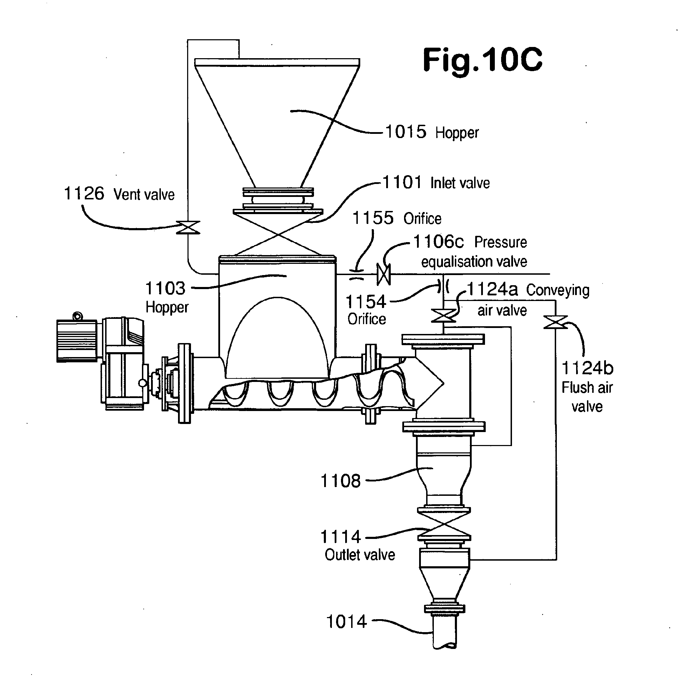

Figures 10A - 10C show alternative flow paths and circuits of a system in accordance with the present invention as in Figures 2 and 2A and like numerals indicate like parts.

The system as shown in Figure 10B has a valve 1124r (like the valve 1124b) downstream of an orifice 1154r (like the orifice 1154). A valve 1124s is downstream of the orifice 1154. The conveying air valve 1124a is downstream of an orifice 1154t. As shown in Figure 10B, and as is true for the other embodiments with an upstream connection 1109 and a downstream connection 1115, air is supplied to the upstream connection 1109 when the hopper 1103 is being emptied in a material conveyance mode and the pressure equalization valve 1106c is open so that the pressure across the metering screw is equalized (and the valve 1106c is closed when filling the hopper 1103 since the hopper 1103 is then open to atmosphere via the valve 1101). Air is supplied to the downstream connection 1115 while the hopper 1103 is being filled so that conveyance can continue (or to blow through the discharge pipe for cleaning). By choosing which valves (1124a, 1124b, 1124r, 1124s) to open or close a particular line with a particular orifice is chosen for particular material (wet or dry).

## Claims

1. An apparatus for conveying drill cuttings produced in the construction of an oil or gas well, the apparatus comprising a vessel (1103,1202) for receiving material to be conveyed, a metering screw (1107,1215) and a discharge line (1014,1009), the metering screw (1107,1215) for moving the material from the vessel (1103,1202) into said discharge line (1014,1009), and at least one gas inlet (1106,1109,1218,1205) for providing positive pressure to facilitate movement of the material through the discharge line (1014,1009), a pressure sensor (1109c) for sensing pressure in the discharge line (1014), and control apparatus (PD) for automatically controlling the metering screw in response to a pressure sensed by the pressure sensor apparatus **characterised in that** said vessel (1103,1202) has a further gas inlet (1106,1205) for allowing gas under pressure into the vessel (1103,1202) to inhibit material from being blown from the discharge line (1014,1009) across the metering screw (1107,1211) and into the vessel (1107,1202) and wherein said gas inlet (1109) comprises an annular gap (1113) about the discharge pipe (1112).

2. An apparatus as claimed in Claim 1, wherein said gas inlet (1109) is arranged in said discharge line (1014,1112).

3. An apparatus as claimed in Claim 1 or 2, wherein said gas inlet (1109) is arranged in a collar (1110) surrounding a pipe stub (1112) through which said material is conveyed, an annular gap (1113) formed between said pipe collar (1110) and said pipe stub (1112), said annular gap (1113) for facilitating entry of said gas into said discharge line.

4. An apparatus as claimed in any preceding claim, further comprising a reducer (1108,1120,1222,1226) in the discharge line having a first diameter at a first end and a second diameter at a second end, the diameter of the first reducer gradually decreasing from the first end to the second end, the first end closer to the vessel than the second end.

5. An apparatus as claimed in any preceding claim, wherein the further gas inlet (1106,1205) is provided with a valve for selectively allowing gas into the vessel.

6. An apparatus as claimed in any preceding claim, further comprising an outlet valve (1114;1314a,1223) for selectively opening and closing the discharge line (1014,1009) .

7. An apparatus as claimed in Claim 6, wherein said gas inlet (1109,1218) is arranged between said metering screw (1107,1211) and said outlet valve (1114,1223).

8. An apparatus as claimed in Claim 6, wherein a yet further gas inlet (1115) is arranged downstream of said outlet valve (1114).

9. An apparatus as claimed in any preceding claim, wherein said gas inlet (1109) comprises at least two orifices (1153,1154) and at least one valve (1151,1152) for selecting between each of said at least two orifices (11,53,1154).

10. An apparatus as claimed in Claim 9, wherein said at least two orifices (1153,1154) are of different sizes.

11. An apparatus as claimed in Claim 9 or 10, wherein each of said at least two orifices (1153,1154) are arranged in a pipe (1109a,1150) each having a valve (1151,1152) for selectively allowing gas to pass through one of said at least two orifices.

12. An apparatus as claimed in any of Claims 9 to 11, wherein said control apparatus (PD) includes selection apparatus for selecting a air to flow through one of the at least two orifices (1153,1154) or a the other of said at least two orifices (1153,1154).

13. An apparatus as claimed in any of Claims 9 to 12, wherein at least one of said at least two orifices (1153,1154) exits directly into said discharge line (1112,1014).

14. An apparatus as claimed in any of Claims 9 to 13, wherein said each orifice (1153,1154) exits directly into said discharge line (1112,1014) and into an annular gap formed between said discharge line (1112) and a collar (1110).

15. An apparatus as claimed in any preceding claim, wherein said vessel (1103,1202) is provided with an inlet valve (1101,1208) for selectively allowing material to be conveyed into said vessel (1103,1202).

16. An apparatus as claimed in any preceding claim, further comprising a hopper (1015) arranged above the vessel (1103) for receiving material to be conveyed.

17. An apparatus as claimed in Claim 16, further comprising a vibrating device (1015a) for vibrating said hopper (1015).

18. An apparatus as claimed in Claim 16 or 17, wherein said hopper (1015) is isolated from said vessel (1103).

19. An apparatus as claimed in Claim 18, wherein said hopper (1015) has a gate valve to isolate material held therein from the vessel (1103).

20. An apparatus as claimed in any preceding claim further comprising a load sensor (1128) for monitoring the weight of said vessel (1103,1202).

21. An apparatus as claimed in any preceding claim, wherein the metering screw (1107,1211) is driven by a motor (1123,1213).

22. An apparatus as claimed in any preceding claim, further comprising movement apparatus (1232,1236) having a movement member (1232) within the vessel (1202) and movable adjacent an opening (1209) in the vessel (1202) to facilitate passage of the material to the metering screw (1211).

23. An apparatus as claimed in Claim 22, wherein the movement member (1232) comprises a frame comprising a control shaft (1236) connected to a generally circular shaped outer perimeter portion (1237a,1238) and at least one cross-member (1235).

24. An apparatus as claimed in any preceding claim, wherein said vessel (1202) has a substantially flat bottom (1203).

25. An apparatus as claimed in any of Claims 1 to 23, wherein the vessel (1103) has two sides which slope toward each other.

26. An apparatus as claimed in any preceding claim, wherein the vessel has a conical hopper portion, wherein the conical hopper portion has a cone angle and forms a lower section of the vessel and the cone angle is below a critical value required to achieve mass flow of the drilling cuttings material.

27. An apparatus as claimed in any preceding claim, wherein the pressure sensor (1109c) is arranged close to the exit of the metering screw.

28. An apparatus as claimed in any preceding claim, wherein the pressure sensor (1109c) is arranged at the at least one gas inlet (1109) of the pipe leading to the at least one gas inlet (1109).

29. A method for conveying drill cuttings from a vessel, the drill cuttings produced in the construction of an oil or gas well, the method comprising the steps of loading a vessel (1103,1202) with drill cuttings, activating a metering screw (1107,1215) to move drill cuttings from the vessel to a discharge line (1014,1009), and applying a gas to the drill cuttings to facilitate movement of the drill cuttings along the discharge line (1014,1009), measuring the pressure of the gas in the discharge line (1014,1009) with a pressure sensor (1109c) in response to which the speed of rotation of the metering screw (1107,1215) is adjusted **characterised in that** said vessel (1103,1202) has a further gas inlet (1106,1205) further comprising the step of allowing gas under pressure into the vessel (1103,1202) to inhibit material from being blown from the discharge line (1014,1009) across the metering screw (1107,1211) and into the vessel (1107,1202) and wherein said gas inlet (1109) comprises an annular gap (1113) about the discharge pipe (1112), said gas flowing through said annular gap (1113) to facilitate movement of the drill cuttings along the discharge line (1014,1009).

30. A method in accordance with Claim 29, wherein the speed of rotation of the metering screw (1107,1215) is increased when the pressure is below a predetermined pressure level.

31. A method in accordance with Claim 29 or 30, wherein the speed of rotation of the metering screw (1107,1215) is decreased when the pressure is above a predetermined pressure level.

32. A method in accordance with Claim 30 or 31, wherein the predetermined pressure level is set at a first value when conveying wet drill cuttings and the predetermined pressure level is set at a second value when conveying dry drill cuttings.

33. A method in accordance with claim 33, wherein a moisture sensor measures the moisture content of the drill cuttings which moisture content value is relayed to a control apparatus which receives the moisture content value and sets the predetermined level according to whether the drill cuttings are dry or wet.

34. A method in accordance with any of Claim 30 to 33, wherein the gas applied to the drill cuttings to convey the drill cuttings through the discharge line (1014,1009) is introduced through one of at least two orifices (1053,1054), one of the orifices smaller than the other, such that one provides gas at a high pressure and slow speed and the other at low pressure and high speed.

## Patentansprüche

1. Vorrichtung zum Befördern von Bohrabfällen, die bei der Erstellung eines Öl- oder Gasbohrlochs erzeugt werden, wobei die Vorrichtung ein Gefäß (1103, 1202) zum Aufnehmen von zu beförderndem Material, eine Dosierschrauhe (1107, 1215) und eine Ausgabeleitung (1014, 1009), wobei die Dosierschraube (1107, 1215) dazu dient, das Material aus dem Gefäß (1103, 1202) in die Ausgabeleitung (1014, 1009) zu bewegen, und wenigstens einen Gaseinlass (1106, 1109, 1218, 1205), um einen Überdruck bereitzustellen, um die Bewegung des Materials durch die Ausgabeleitung (1014, 1009) zu erleichtern, einen Drucksensor (1109c), um den Druck in der Ausgabeleitung (1014) zu erfassen, und eine Steuervorrichtung (PD), um die Dosierschraube in Reaktion auf den durch die Drucksensorvorrichtung erfassten Druck automatisch zu steuern, umfasst, **dadurch gekennzeichnet, dass** das Gefäß (1103, 1202) einen weiteren Gaseinlass (1106, 1205) besitzt, um zuzulassen, dass Gas unter Druck in das Gefäß (1103, 1202) gelangt, um zu verhindern, dass Material aus der Ausgabeleitung (1014, 1009) über die Dosierschraube (1107, 1211) und in das Gefäß (1107, 1202) geblasen wird, wobei der Gaseinlass (1109) einen ringförmigen Spalt (1113) um das Ausgaberohr (1112) umfasst.

2. Vorrichtung nach Anspruch 1, wobei der Gaseinlass (1109) in der Ausgabeleitung (1014, 1112) angeordnet ist.

3. Vorrichtung nach Anspruch 1 oder 2, wobei der Gaseinlass (1109) in einem Kranz (1110) angeordnet ist, der einen Rohrstumpf (1112) umgibt, durch den das Material befördert wird, zwischen dem Rohrkranz (1110) und dem Rohrstumpf (1112) ein ringförmiger Spalt (1113) ausgebildet ist und der ringförmige Spalt (1113) den Eintritt des Gases in die Ausgabeleitung erleichtert.

4. Vorrichtung nach einem vorhergehenden Anspruch, die ferner ein Reduzierstück (1108, 1120, 1122, 1226) in der Ausgabeleitung mit einem ersten Durchmesser an einem ersten Ende und einem zweiten Durchmesser an einem zweiten Ende umfasst, wobei der Durchmesser des ersten Reduzierstücks von dem ersten Ende zu dem zweiten Ende allmählich abnimmt, wobei sich das erste Ende näher bei dem Gefäß als das zweite Ende befindet.

5. Vorrichtung nach einem vorhergehenden Anspruch, wobei der weitere Gaseinlass (1106, 1205) mit einem Ventil versehen ist, um wahlweise zuzulassen, dass Gas in das Gefäß eintritt.

6. Vorrichtung nach einem vorhergehenden Anspruch, die ferner ein Auslassventil (1114; 1314a, 1223) umfasst, um die Ausgabeleitung (1114, 1009) wahlweise zu öffnen und zu schließen.

7. Vorrichtung nach Anspruch 6, wobei der Gaseinlass (1109, 1218) zwischen der Dosierschraube (1107, 1211) und dem Auslassventil (1114, 1223) angeordnet ist.

8. Vorrichtung nach Anspruch 6, wobei ein nochmals weiterer Gaseinlass (1115) stromabseitig des Auslassventils (1114) angeordnet ist.

9. Vorrichtung nach einem vorhergehenden Anspruch, wobei der Gaseinlass (1109) wenigstens zwei Mündungen (1153, 1154) und wenigstens ein Ventil (1151, 1152) umfasst, um zwischen jeder der wenigstens zwei Mündungen (1153, 1154) zu wählen.

10. Vorrichtung nach Anspruch 9, wobei die wenigstens zwei Öffnungen (1153, 1154) unterschiedliche Größen haben.

11. Vorrichtung nach Anspruch 9 oder 10, wobei jede der wenigstens zwei Mündungen (1153, 1154) in einem Rohr (1109a, 1150) angeordnet ist, wovon jede ein Ventil (1151, 1152) besitzt, um wahlweise zuzulassen, dass sich Gas durch eine der wenigstens zwei Mündungen bewegt.

12. Vorrichtung nach einem der Ansprüche 9 bis 11, wobei die Steuervorrichtung (PD) eine Wählvorrichtung umfasst, um zu wählen, dass Luft durch eine der wenigstens zwei Mündungen (1153, 1154) oder durch die andere der wenigstens zwei Mündungen (1153, 1154) strömt.

13. Vorrichtung nach einem der Ansprüche 9 bis 12, wobei wenigstens eine der wenigstens zwei Mündungen (1153, 1154) direkt in die Ausgabeleitung (1112, 1014) austritt.

14. Vorrichtung nach einem der Ansprüche 9 bis 13, wobei jede Mündung (1153, 1154) direkt in die Ausgabeleitung (1112, 1014) und in einen ringförmigen Spalt, der zwischen der Ausgabeleitung (1112) und einem Kranz (1110) gebildet ist, austritt.

15. Vorrichtung nach einem vorhergehenden Anspruch, wobei das Gefäß (1103, 1202) mit einem Einlassventil (1101, 1208) versehen ist, um wahlweise zuzulassen, dass Material in das Gefäß (1103, 1202) befördert wird.

16. Vorrichtung nach einem vorhergehenden Anspruch, die ferner einen Trichter (1015) umfasst, der über dem Gefäß (1103) angeordnet ist, um zu beförderndes Material aufzunehmen.

17. Vorrichtung nach Anspruch 16, die ferner eine Vibrationsvorrichtung (1015a) umfasst, um den Trichter (1015) vibrieren zu lassen.

18. Vorrichtung nach Anspruch 16 oder 17, wobei der Trichter (1015) von dem Gefäß (1103) isoliert ist.

19. Vorrichtung nach Anspruch 18, wobei der Trichter (1015) ein Torventil besitzt, um darin gehaltenes Material gegenüber dem Gefäß (1103) zu isolieren.

20. Vorrichtung nach einem vorhergehenden Anspruch, die ferner einen Lastsensor (1128) umfasst, um das Gewicht des Gefäßes (1103, 1202) zu überwachen.

21. Vorrichtung nach einem vorhergehenden Anspruch, wobei die Dosierschraube (1107, 1121) durch einen Motor (1123, 1213) angetrieben wird.

22. Vorrichtung nach einem vorhergehenden Anspruch, die ferner eine Bewegungsvorrichtung (1232, 1236) umfasst, die ein Bewegungselement (1232) in dem Gefäß (1202) besitzt und benachbart zu einer Öffnung (1209) in dem Gefäß (1202) beweglich ist, um den Durchgang des Materials zu der Dosierschraube (1211) zu erleichtern.

23. Vorrichtung nach Anspruch 22, wobei das Bewegungselement (1232) einen Rahmen umfasst, der eine Steuerwelle (1236), die mit einem Abschnitt (1237a, 1238) mit einem im Allgemeinen kreisförmigen äußeren Umfang verbunden ist, und wenigstens ein Querelement (1235) aufweist.

24. Vorrichtung nach einem vorhergehenden Anspruch, wobei das Gefäß (1202) einen im Wesentlichen ebenen Boden (1203) besitzt.

25. Vorrichtung nach einem der Ansprüche 1 bis 23, wobei das Gefäß (1103) zwei Seiten hat, die aufeinander zu laufen.

26. Vorrichtung nach einem vorhergehenden Anspruch, wobei das Gefäß einen konischen Trichterabschnitt besitzt, wobei der konische Trichterabschnitt einen Konuswinkel hat und einen unteren Abschnitt des Gefäßes bildet und wobei der Konuswinkel unter einem kritischen Wert liegt, der erforderlich ist, um einen Massendurchfluss des Bohrabfall-Materials zu erzielen.

27. Vorrichtung nach einem vorhergehenden Anspruch, wobei der Drucksensor (1109c) in der Nähe des Austritts der Dosierschraube angeordnet ist.

28. Vorrichtung nach einem vorhergehenden Anspruch, wobei der Drucksensor (1109c) bei dem wenigstens einen Gaseinlass (1109) des Rohrs, das zu dem wenigstens einen Gaseinlass (1109) führt, angeordnet ist.

29. Verfahren zum Befördern von Bohrabfällen aus einem Gefäß, wobei die Bohrabfälle bei der Erstellung eines Öl- oder Gasbohrlochs erzeugt werden, wobei das Verfahren die folgenden Schritte umfasst: Beschicken eines Gefäßes (1103, 1202) mit Bohrabfällen, Aktivieren einer Dosierschraube (1107, 1215), um Bohrabfälle aus dem Gefäß zu einer Ausgabeleitung (1014, 1009) zu bewegen, und Anwenden von Gas auf die Bohrabfälle, um die Bewegung der Bohrabfälle längs der Ausgabeleitung (1014, 1009) zu erleichtern, Messen des Drucks des Gases in der Ausgabeleitung (1014, 1009) mit einem Drucksensor (1109c), in Reaktion worauf die Drehzahl der Dosierschraube (1107, 1215) eingestellt wird, **dadurch gekennzeichnet, dass** das Gefäß (1103, 1202) einen weiteren Gaseinlass (1106, 1205) besitzt, ferner mit dem Schritt des Zulassens, dass Gas unter Druck in das Gefäß (1103, 1202) eintritt, um zu verhindern, dass Material aus der Ausgabeleitung (1014, 1009) über die Dosierschraube (1107, 1211) und in das Gefäß (1107, 1202) geblasen wird, wobei der Gaseinlass (1109) einen ringförmigen Spalt (1113) um das Ausgaberohr (1112) umfasst, wobei das Gas durch den ringförmigen Spalt (1113) strömt, um die Bewegung der Bohrabfälle längs der Ausgabeleitung (1014, 1009) zu erleichtern.

30. Verfahren nach Anspruch 29, wobei die Drehzahl der Dosierschraube (1107, 1215) erhöht wird, wenn der Druck unter einem vorgegebenen Druckpegel liegt.

31. Verfahren nach Anspruch 29 oder 30, wobei die Drehzahl der Dosierschraube (1107, 1215) erniedrigt wird, wenn der Druck über einem vorgegebenen Druckpegel liegt.

32. Verfahren nach Anspruch 30 oder 31, wobei der vorgegebene Druckpegel auf einen ersten Wert gesetzt wird, wenn nasse Bohrabfälle befördert werden, und der vorgegebene Druckpegel auf einen zweiten Wert gesetzt wird, wenn trockene Bohrabfälle befördert werden.

33. Verfahren nach Anspruch 33, wobei ein Feuchtigkeitssensor den Feuchtigkeitsgehalt der Bohrabfälle misst, wobei der Feuchtigkeitsgehaltwert zu einer Steuervorrichtung weitergeleitet wird, die den Feuchtigkeitsgehaltwert empfängt und den vorgegebenen Pegel entsprechend der Tatsache, ob die Bohrabfälle trocken oder nass sind, setzt.

34. Verfahren nach einem der Ansprüche 30 bis 33, wobei das auf die Bohrabfälle angewendete Gas, um die Bohrabfälle durch die Ausgabeleitung (1014, 1009) zu befördern, durch eine von wenigstens zwei Mündungen (1053, 1054) eingeleitet wird, wobei eine der Mündungen kleiner als die andere ist, derart, dass eine Mündung Gas mit einem hohen Druck und geringer Geschwindigkeit und die andere Gas mit niedrigem Druck und hoher Geschwindigkeit bereitstellt.

## Revendications

1. Appareil destiné à transporter des déblais de forage produits dans la construction d'un puits de gaz ou de pétrole, l'appareil comportant une enceinte (1103, 1202) destinée à recevoir le matériau à transporter, une vis sans fin de réglage (1107, 1215), et une ligne d'évacuation (1014, 1009), la vis sans fin de réglage (1107, 1215) permettant de faire passer le matériau de l'enceinte (1103, 1202) dans ladite ligne d'évacuation (1014, 1009), et au moins une admission de gaz (1106, 1109, 1218, 1205) pour fournir une pression positive afin de faciliter le déplacement du matériau à travers la ligne d'évacuation (1014, 1009), un capteur de pression (1109c) permettant de détecter la pression dans la ligne d'évacuation (1014), et un dispositif de commande (PD) permettant de commander automatiquement la vis sans fin de réglage en réponse à une pression détectée par le dispositif de capteur de pression, **caractérisé en ce que** ladite enceinte (1103, 1202) possède une admission de gaz supplémentaire (1106, 1205) pour permettre au gaz sous pression dans l'enceinte (1103, 1202) d'empêcher le matériau d'être soufflé hors de la ligne d'évacuation (1014, 1009) à travers la vis sans fin de réglage (1107, 1211) et dans l'enceinte (1103, 12102) et dans lequel ladite admission de gaz (1109) comprend un espacement annulaire (1113) autour de la conduite d'évacuation (1112).

2. Appareil selon la revendication 1, dans lequel ladite admission de gaz (1109) est disposée dans ladite ligne d'évacuation (1014, 1112).

3. Appareil selon la revendication 1 ou 2, dans lequel ladite admission de gaz (1109) est agencée dans un collier (1110) entourant un tronçon de conduite (1112) par l'intermédiaire duquel ledit matériau est transporté, un espacement annulaire (1113) étant formé entre ledit collier de conduite (1110) et ledit tronçon de conduite (1112), ledit espacement annulaire (1113) servant à faciliter l'entrée dudit gaz dans ladite ligne d'évacuation.

4. Appareil selon l'une quelconque des revendications précédentes, comprenant, de plus, un raccord réducteur (1108, 1120, 1222, 1226) dans la ligne d'évacuation présentant un premier diamètre au niveau d'une première extrémité et un second diamètre au niveau d'une seconde extrémité, le diamètre du premier raccord réducteur diminuant progressivement de la première extrémité à la seconde extrémité, la première extrémité étant plus proche de l'enceinte que la seconde extrémité.

5. Appareil selon l'une quelconque des revendications précédentes, dans lequel l'admission de gaz supplémentaire (1106, 1205) est équipée d'une vanne pour permettre au gaz d'entrer de façon sélective dans l'enceinte.

6. Appareil selon l'une quelconque des revendications précédentes, comprenant, de plus, une vanne de sortie (1114 ; 1314a, 1223) permettant d'ouvrir et de fermer, de façon sélective, la ligne d'évacuation (1014, 1009).

7. Appareil selon la revendication 6, dans lequel ladite admission de gaz (1109, 1218) est agencée entre ladite vis sans fin de réglage (1107, 1211) et ladite vanne de sortie (1114, 1223).

8. Appareil selon la revendication 6, dans lequel encore une autre admission de gaz (1115) est agencée en aval de ladite vanne de sortie (1114).

9. Appareil selon l'une quelconque des revendications précédentes, dans lequel ladite admission de gaz (1109) comporte au moins deux orifices (1153, 1154) et au moins une vanne (1151, 1152) permettant d'opérer une sélection entre chacun desdits au moins deux orifices (1153, 1154).

10. Appareil selon la revendication 9, dans lequel lesdits au moins deux orifices (1153, 1154) sont de dimensions différentes.

11. Appareil selon la revendication 9 ou 10, dans lequel chacun desdits au moins deux orifices (1153, 1154) est disposé dans un tuyau (1109a, 1150) comportant chacun une vanne (1151, 1152) pour permettre au gaz de passer, de façon sélective, à travers l'un desdits au moins deux orifices.

12. Appareil selon l'une quelconque des revendications 9 à 11, dans lequel ledit appareil de commande (PD) comporte un dispositif de sélection permettant d'opérer une sélection de l'air à faire circuler à travers l'un des au moins deux orifices (1153, 1154) ou à travers l'autre desdits au moins deux orifices (1153, 1154).

13. Appareil selon l'une quelconque des revendications 9 à 12, dans lequel l'un au moins desdits au moins deux orifices (1153, 1154) s'ouvre directement dans ladite ligne d'évacuation (1112, 1014).

14. Appareil selon l'une quelconque des revendications 9 à 13, dans lequel chaque dit orifice (1153, 1154) s'ouvre directement dans ladite ligne d'évacuation (1112, 1014) et dans un espacement annulaire formé entre ladite ligne d'évacuation (1112) et un collier (1110).

15. Appareil selon l'une quelconque des revendications précédentes, dans lequel ladite enceinte (1103, 1202) est prévue avec une vanne d'admission (1101, 1208) permettant au matériau d'être transporté, de façon sélective, dans ladite enceinte (1103, 1202).

16. Appareil selon l'une quelconque des revendications précédentes, comprenant, de plus, une trémie (1015) disposée au-dessus de l'enceinte (1103) pour recevoir le matériau à transporter.

17. Appareil selon la revendication 16, comprenant, de plus, un dispositif vibrant (1015a) permettant de faire vibrer ladite trémie (1015).

18. Appareil selon la revendication 16 ou 17, dans lequel ladite trémie (1015) est isolée de ladite enceinte (1103).

19. Appareil selon la revendication 18, dans lequel ladite trémie (1015) possède une vanne d'arrêt pour isoler le matériau qu'elle retient de l'enceinte (1103).

20. Appareil selon l'une quelconque des revendications précédentes comprenant, de plus, un détecteur de charge (1128) permettant de contrôler le poids de ladite enceinte (1103, 1202).

21. Appareil selon l'une quelconque des revendications précédentes dans lequel la vis sans fin de réglage (1107, 1211) est entraînée par un moteur (1123, 1213).

22. Appareil selon l'une quelconque des revendications précédentes, comprenant, de plus, un dispositif de déplacement (1232, 1236) comportant un élément de déplacement (1232) à l'intérieur de l'enceinte(1202) et mobile de façon adjacente à une ouverture (1209) dans l'enceinte (1202) afin de faciliter le passage du matériau vers la vis sans fin de réglage (1211).

23. Appareil selon la revendication 22, dans lequel l'élément de déplacement (1232) comporte une structure comprenant un arbre de commande (1236) connecté à une partie de périmètre extérieur configurée de façon généralement circulaire (1237a, 1238) et à au moins un élément transversal (1235).

24. Appareil selon l'une quelconque des revendications précédentes, dans lequel ladite enceinte (1202) présente un fond essentiellement plat (1203).

25. Appareil selon l'une quelconque des revendications 1 à 23, dans lequel ladite enceinte (1103) comporte deux côtés qui s'inclinent l'un vers l'autre.

26. Appareil selon l'une quelconque des revendications précédentes, dans lequel l'enceinte possède une partie de trémie conique, dans lequel la partie de trémie conique possède un angle de cône et forme une section inférieure de l'enceinte et l'angle de cône est inférieur à une valeur critique requise pour obtenir un écoulement massique du matériau constitué de déblais de forage.

27. Appareil selon l'une quelconque des revendications précédentes, dans lequel le capteur de pression (1109c) est disposé à proximité de la sortie de la vis sans fin de réglage.

28. Appareil selon l'une quelconque des revendications précédentes dans lequel le capteur de pression (1109c) est disposé au niveau d'au moins une admission de gaz (1109) du tuyau conduisant vers la au moins une admission de gaz (1109).

29. Procédé de transport de déblais de forage à partir d'une enceinte, les déblais de forage étant produits lors de la construction d'un puits de pétrole ou de gaz, le procédé comprenant les étapes incluant le fait de charger une enceinte (1103, 1202) avec les déblais de forage, d'activer une vis sans fin de réglage (1107, 1215) pour déplacer les déblais de forage de l'enceinte vers une ligne d'évacuation (1014, 1009), et d'appliquer un gaz sur les déblais de forage pour faciliter le déplacement des déblais de forage le long de la ligne d'évacuation (1014, 1009), de mesurer la pression du gaz dans la ligne d'évacuation (1014, 1009) avec un capteur de pression (1109c) en réponse de quoi la vitesse de rotation de la vis de réglage sans fin (1107, 1215) est ajustée, **caractérisé en ce que** ladite enceinte (1103, 1202) comporte une admission de gaz supplémentaire (1106, 1205) comprenant, de plus, l'étape consistant à permettre au gaz sous pression à l'intérieur de l'enceinte (1103, 1202) d'empêcher le matériau d'être soufflé à partir de la ligne d'évacuation (1014, 1009) à travers la vis sans fin de réglage (1107, 1211) et à l'intérieur de l'enceinte (1107, 1202) et dans lequel ladite admission de gaz (1109) comporte un espacement annulaire (1113) autour du tuyau d'évacuation (1112), ledit gaz circulant à travers ledit espacement annulaire (1113) afin de faciliter le déplacement des déblais de forage le long de la ligne d'évacuation (1014, 1009).

30. Procédé selon la revendication 29, dans lequel la vitesse de rotation de la vis sans fin de réglage (1107, 1215) est accrue lorsque la pression se situe au-dessous d'un niveau de pression prédéterminé.

31. Procédé selon la revendication 29 ou 30, dans lequel la vitesse de rotation de la vis sans fin de réglage (1107, 1215) diminue lorsque la pression se situe au-dessus d'un niveau de pression prédéterminé.

32. Procédé selon la revendication 30 ou 31, dans lequel le niveau de pression prédéterminé est établi à une première valeur lors du transport de déblais de forages humides et le niveau de pression prédéterminé est établi à une seconde valeur lors du transport de déblais de forage secs.

33. Procédé selon la revendication 32, dans lequel un capteur d'humidité mesure la teneur en humidité des déblais de forage laquelle valeur de la teneur en humidité est relayée vers un dispositif de commande qui reçoit la valeur de la teneur en humidité et établit le niveau prédéterminé selon que les déblais de forage sont secs ou humides.

34. Procédé selon l'une quelconque des revendications 30 à 33, dans lequel le gaz appliqué aux déblais de forage pour transporter les déblais de forage à travers la ligne d'évacuation (1014, 1009) est introduit par l'un des au moins deux orifices (1053, 1054), l'un des orifices étant plus petit que l'autre, de telle sorte que l'un fournisse un gaz sous pression élevée et une vitesse réduite et que l'autre fournisse un gaz sous faible pression et une vitesse élevée.
